# EUROPEAN PATENT APPLICATION

(11) **EP 4 075 244 A1**
(43) Date of publication of application: **19.10.2022**
(21) Application number: 20904152.4
(22) Date of filing: 11.12.2020
(51) Int. Cl.: G06F 3/041, G06F 1/16

(54) **FLEXIBLE DISPLAY SCREEN ASSEMBLY AND ELECTRONIC DEVICE**

(30) Priority: 19.12.2019 CN 201911317711
(71) Applicant: GUANGDONG OPPO MOBILE TELECOMMUNICATIONS CORP., LTD., Dongguan, Guangdong 523860 (CN)
(72) Inventor: LI, Jing, Dongguan, Guangdong 523860 (CN)
(74) Representative: Penza, Giancarlo
(86) International application number: PCT/CN2020/135707
(87) International publication number: WO 2021/121157

(57) **Abstract**

A flexible display screen assembly (30) and an electronic device (100). The flexible display screen assembly (30) comprises a flexible display screen (32) and a support assembly (34) stacked with the flexible display screen (32), the support assembly (34) comprises a plurality of support members (342) and a first flexible member (346), the plurality of support members (342) are provided in parallel, a gap (3422) is formed between every two adjacent support members (342), and the first flexible member (346) passes through the gaps (3422) sequentially and winds the plurality of support members (342).

## Description

### CROSS-REFERENCE TO RELATED APPLICATION

The present disclosure claims priority and benefit to a patent application No. 201911317711.0, filed to China National Intellectual Property Administration (CNIPA) on December 19, 2019, the content of which is hereby incorporated by reference in its entirety.

### TECHNICAL FIELD

The present disclosure relates to the field of electronic technologies, and in particularly to a flexible display screen assembly and an electronic device.

### DESCRIPTION OF RELATED ART

In a related art, when a flexible display screen is rolled up, the flexible display screen is bent and retracted repeatedly; and in such a case, as a main force-bearing carrier, the flexible display screen is easy to be damaged during the repeated bending and retracting, so that the service life of the flexible display screen is reduced.

### SUMMARY

A flexible display screen assembly and electronic devices are provided according to embodiments of the present disclosure.

In an embodiment of the present disclosure, the flexible display screen assembly is provided, which includes: a flexible display screen; and a support assembly, stacked with the flexible display screen and including multiple support members and a first flexible member; where the multiple support members are arranged in parallel, every adjacent two of the multiple support members have a gap formed therebetween, and the first flexible member sequentially passes through the gaps and winds the multiple support members.

In an embodiment of the present disclosure, an electronic device is provided, which includes a housing; and a flexible display screen assembly, disposed on the housing; wherein the flexible display screen assembly includes a flexible display screen, and a support assembly stacked with the flexible display screen; the support assembly includes a multiple support members, and a first flexible member; where the multiple support members are arranged in parallel, and every adjacent two of the multiple support members have a gap formed therebetween; and the first flexible member passes through the gaps sequentially and winds the multiple support members.

In an embodiment of the present disclosure, another electronic device is provided, which includes: a housing including a first portion and a second portion moveable with respect to each other; and a flexible display screen assembly; where an end of the flexible display screen assembly connected to the second portion, and another end of the flexible display screen assembly is arranged in the housing; where the flexible display screen assembly includes a flexible display screen, and a support assembly stacked with the flexible display screen; the support assembly includes multiple support members, and a first flexible member; the multiple support members are arranged in parallel, and every adjacent two of the multiple support members has a gap formed therebetween, and the first flexible member passes through the gaps sequentially and winds the multiple support members; and where a part of the flexible display screen assembly located in the housing at least partially extends out of the housing when the first portion and the second portion move away from each other, to expand a display portion of the flexible display screen.

A part of additional aspects and advantages of embodiments of the present disclosure will be set forth in descriptions as follows, and another part thereof will be apparent from the descriptions or may be learned by practice of the embodiments of the present disclosure.

### BRIEF DESCRIPTION OF DRAWINGS

The above and/or additional aspects and advantages of the present disclosure will become apparent and readily understood from the following description of embodiments with reference to the accompanying drawings.
FIG. 1 illustrates a schematic structural view of an electronic device according to an embodiment of the present disclosure.
FIG. 2 illustrates another schematic structural view of the electronic device according to an embodiment of the present disclosure.
FIG. 3 illustrates a schematic perspective exploded view of the electronic device according to an embodiment of the present disclosure.
FIG. 4 illustrates a schematic plan view of the electronic device according to an embodiment of the present disclosure.
FIG. 5 illustrates a schematic cross-sectional view of the electronic device in FIG. 4 taken along line V-V.
FIG. 6 illustrates another schematic plan view of the electronic device according to an embodiment of the present disclosure.
FIG. 7 illustrates a schematic cross-sectional view of the electronic device in FIG. 6 taken along line VII-VII.
FIG. 8 illustrates a schematic partial structural view of the electronic device according to an embodiment of the present disclosure;
FIG. 9 illustrates a schematic structural view of a second portion of a housing of the electronic device according to an embodiment of the present disclosure.
FIG. 10 illustrates another structural view of the second portion of the housing of the electronic device according to an embodiment of the present disclosure.
FIG. 11 illustrates still another schematic structural view of the electronic device according to an embodiment of the present disclosure.
FIG. 12 illustrates even still another schematic structural view of the electronic device according to an embodiment of the present disclosure.
FIG. 13 illustrates a schematic structural view of another electronic device according to an embodiment of the present disclosure.
FIG. 14 illustrates another schematic structural view of the another electronic device according to an embodiment of the present disclosure.
FIG. 15 illustrates a schematic cross-sectional view of the another electronic device according to an embodiment of the present disclosure.
FIG. 16 illustrates a schematic cross-sectional view of the another electronic device according to an embodiment of the present disclosure.
FIG. 17 illustrates a schematic cross-sectional view of still another electronic device according to an embodiment of the present disclosure.
FIG. 18 illustrates a schematic structural view of a recovery mechanism of the still another electronic device according to an embodiment of the present disclosure.
FIG. 19 illustrates a structural view of a snap-in structure of the still another electronic device according to an embodiment of the present disclosure.
FIG. 20 illustrates a structural schematic view of another snap-in structure of the still another electronic device according to an embodiment of the present disclosure.
FIG. 21 illustrates a schematic structural view of a flexible display screen assembly according to an embodiment of the present disclosure.
FIG. 22 illustrates a structural view of a first flexible member and a second flexible member of a support assembly according to an embodiment of the present disclosure.
FIG. 23 illustrates an enlarged schematic view at a position A in FIG. 22.
FIG. 24 illustrates a structural view of support members and support plates of a support assembly according to an embodiment of the present disclosure.
FIG. 25 illustrates an enlarged schematic view at a position B in FIG. 24.
FIG. 26 illustrates a cross-sectional view of the support assembly of the flexible display screen assembly according to an embodiment of the present disclosure.
FIG. 27 illustrates an enlarged schematic view at a position C in FIG. 26.
FIG. 28 illustrates another schematic cross-sectional view of the support assembly of the flexible display screen assembly according to an embodiment of the present disclosure.
FIG. 29 illustrates an enlarged schematic view at a position D in FIG. 28.

### DETAILED DESCRIPTION OF EMBODIMENTS

The embodiments of the present disclosure will be further explained with reference to the drawings. The same or similar reference numerals in the drawings indicate the same or similar elements or elements with the same or similar functions throughout.

In addition, the embodiments of the present disclosure described below with reference to the drawings are exemplarily, are merely used to explain the embodiments of the present disclosure, and are not intended be construed as limitations to the present disclosure.

The following description provides many different embodiments or examples to realize different structures of the present disclosure. In order to simplify the present disclosure, components and arrangements of specific examples are described hereinafter. Of course, the descriptions are merely exemplarily and not intended to limit the present application. In addition, in different examples of the present disclosure, reference numerals and/or reference letters can be used repeatedly. This repetition is for the purpose of simplification and clarity, but not intended to limit the relationship between various embodiments and/or settings discussed.

A flexible display screen assembly of an embodiment of the present disclosure includes: a flexible display screen; and a support assembly, stacked with the flexible display screen and including multiple support members and a first flexible member; where the multiple support members are arranged in parallel, every adjacent two of the multiple support members have a gap formed therebetween, and the first flexible member sequentially passes through the gaps and winds the multiple support members.

In some embodiments of the present disclosure, the first flexible member may include first connecting lines, and the first connecting lines sequentially pass through the gaps and wind the multiple support members.

In some embodiments of the present disclosure, the support assembly may further include a second flexible member; and the second flexible member is stacked and fixedly connected with the multiple support members, and covers the multiple support members.

In some embodiments of the present disclosure, the second flexible member may be a mesh structure; and the second flexible member may include: multiple second connecting lines arranged at intervals; and multiple third connecting lines, arranged at intervals and crossing with the multiple second connecting lines.

In some embodiments of the present disclosure, the first flexible member and the second flexible member may each be fixedly connected to the multiple support members through solid adhesive.

In some embodiments of the present disclosure, the flexible display screen may include a first surface and a second surface opposite to the first surface, the flexible display screen may be configured to display through the first surface, and the support assembly may cover the second surface.

In some embodiments of the present disclosure, the flexible display screen may include a flat region and a bending region, and the multiple support members are attached onto the bending region.

In some embodiments of the present disclosure, the support assembly may be further include a support plate, and the support plate may be attached onto the flat region.

In some embodiments of the present disclosure, the flexible display screen assembly may be further include a film layer, and the film layer may be stacked with the support assembly and may cover the support assembly.

In some embodiments of the present disclosure, the first flexible member may include a textile thread.

In some embodiments of the present disclosure, the flexible display screen assembly may be further include a cover plate covering the flexible display screen, and the flexible display screen may be configured to perform luminous display through the cover plate.

An electronic device of an embodiment of the present disclosure includes: a housing; and a flexible display screen assembly, disposed on the housing; where the flexible display screen assembly includes: a flexible display screen, and a support assembly stacked with the flexible display screen; the support assembly includes multiple support members and a first flexible member; the multiple support members are arranged in parallel, every adjacent two of the multiple support members have a gap formed therebetween; and the first flexible member passes through the gaps sequentially and winds the multiple support members.

In some embodiment of the present disclosure, the housing may include a first portion and a second portion movable with respect to each other; and the electronic device may further include a reel, an end of the flexible display screen assembly is connected to the second portion, and another end of the flexible display screen assembly is arranged on the reel; the reel is configured to rotate to release the flexible display screen assembly and thereby expand a display portion of the flexible display screen assembly, when the first portion and the second portion move away from each other.

In some embodiments of the present disclosure, the electronic device may include a driving mechanism, the driving mechanism is connected to the second portion; and the driving mechanism is configured to drive the second portion, s to move away from the first portion and thereby drive the flexible display screen assemble to move to expand the display portion of the flexible display screen.

In some embodiments of the present disclosure, the driving mechanism may include a motor, and a first transmission structure connected to the motor and the second portion; and the motor is configured to drive the second portion to move relative to the first portion through the first transmission structure.

In some embodiments of the present disclosure, the first transmission structure may include a first transmission gear connected to the motor, and a rack portion fixed onto the second portion; and the rack portion may be meshed with the first transmission gear.

In some embodiments of the present disclosure, the rack portion may be integrally formed with the second portion.

In some embodiments of the present disclosure, the driving mechanism may include a second transmission structure connected to the reel and the first transmission gear; and the motor may be configured to drive the reel to rotate through the second transmission structure to release the flexible display screen assembly while driving the second portion to move away from the first portion.

In some embodiments of the present disclosure, the second transmission structure may include a second transmission gear, and a third transmission gear; and the second transmission gear may be fixed on the reel, the third transmission gear may be rotatably arranged on the first portion and may be meshed with the first transmission gear and the second transmission gear individually, and the first transmission gear and the second transmission gear may be located on opposite sides of the third transmission gear.

Another electronic device of an embodiment of the present disclosure includes: a housing including a first portion and a second portion movable with respect to each other; and a flexible display screen assembly; where an end of the flexible display screen assembly connected to the second portion, and another end of the flexible display screen assembly is arranged in the housing; where the flexible display screen assembly includes a flexible display screen, and a support assembly stacked with the flexible display screen; the support assembly includes multiple support members, and a first flexible member; the multiple support members are arranged in parallel, every adjacent two of the multiple support members have a gap formed therebetween; and the first flexible member passes through the gaps sequentially and winds the multiple support members; and where a part of the flexible display screen assembly located in the housing at least partially extends out of the housing when the first portion and the second portion move away from each other, to expand a display portion of the flexible display screen.

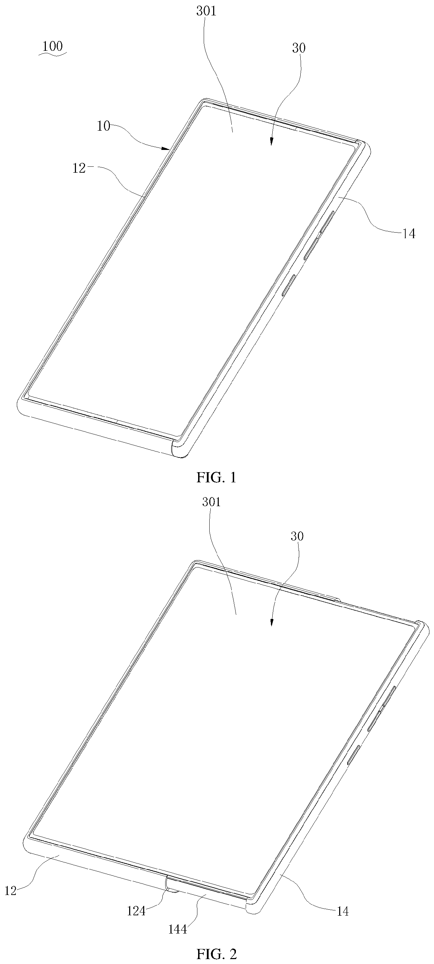

Referring to FIGS. 1 to 3, an electronic device 100 of an embodiment of the present disclosure includes: a housing 10, a reel 20, a flexible display screen assembly 30, a stopper (also referred as to be limit member) 40, a cover body 50, a camera 60, a main board 101, and a driving mechanism 70. The reel 20, the flexible display screen assembly 30, the stopper 40, the cover body 50, the camera 60 and the main board 101 and the driving mechanism 70 each may be disposed in the housing 10.It is understood that the electronic device 100 of the embodiment of the present disclosure may include, but may be not limited to, a mobile terminal such as a mobile phone, a tablet or other portable electronic device, and the electronic device 100 is described as an example of a mobile phone herein.

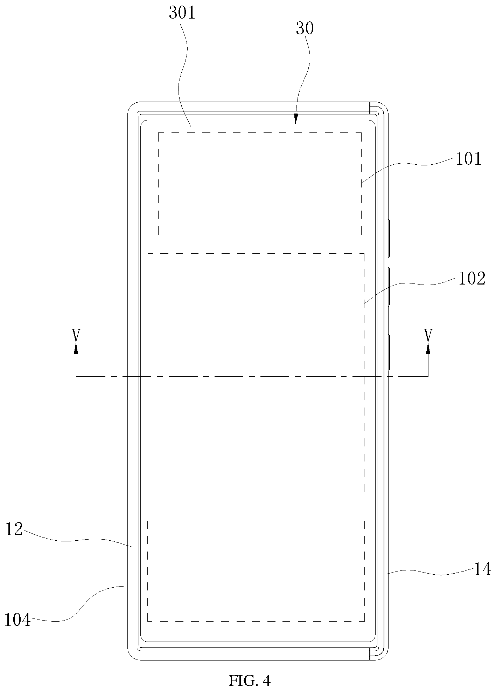

Referring to FIGS. 4 to 7, in an embodiment of the present disclosure, the housing 10 may include a first portion 12 and a second portion 14. The first portion 12 and the second portion 14 can movable with respect to each other. Specifically, in a special embodiment, the first portion 12 and the second portion 14 are slidably connected, that is to say, the second portion 14 is capable of sliding relative to the first portion 12.

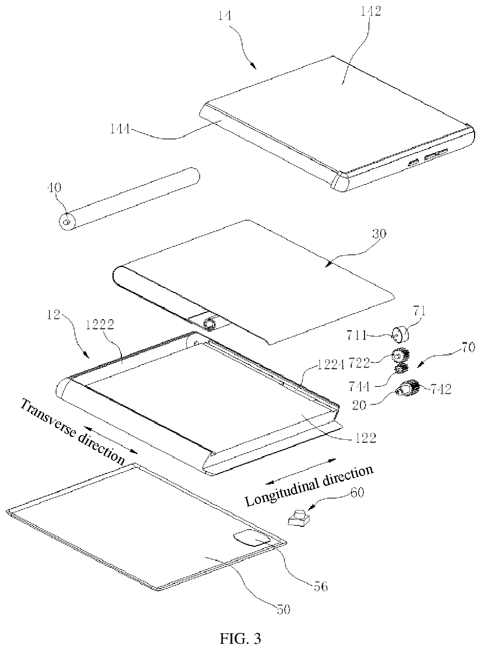

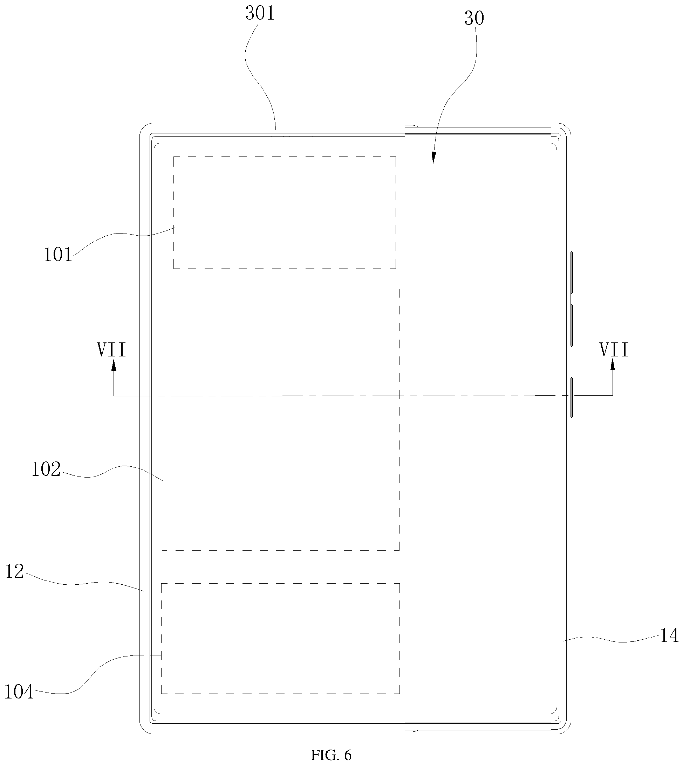

Referring to FIGS. 3 to 7, in an embodiment of the present disclosure, the first portion 12 may be substantially rectangular; and the first portion 12 is formed with an accommodating space 120, and a bottom of the accommodating space is opened. The accommodating space 120 may be used to accommodate components such as the reel 20, the stopper 40, the camera 60, the main board 101, and the driving mechanism 70. Further, referring to FIG. 4 and FIG. 6, the accommodating space 120 can also be used for stacking other electrical components of the electronic device 100, such as a battery 102 and an auxiliary board 103. The auxiliary board 103 can be used to set thereon an electrical component such as a speaker and a microphone of the electronic device 100.

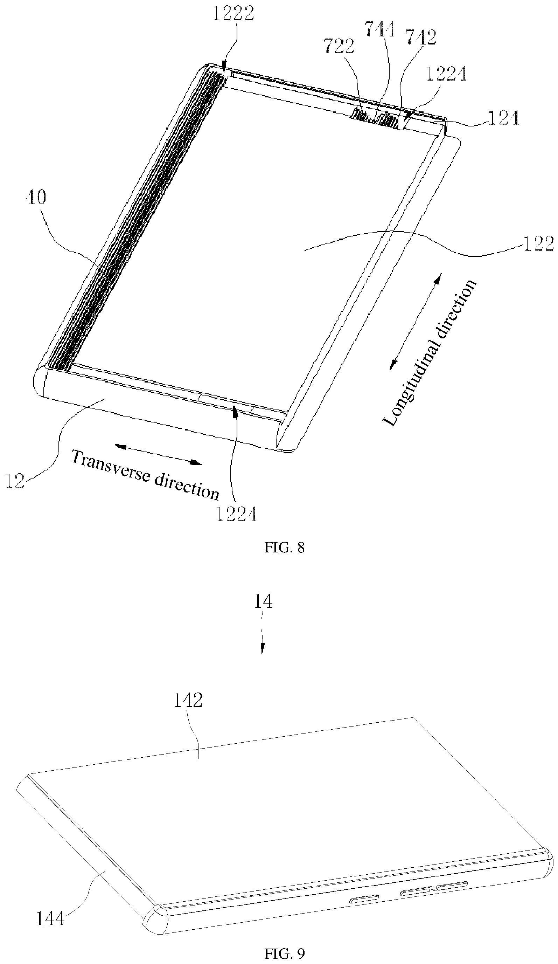

Referring to FIGS. 3 and 8, the first portion 12 includes a first top plate 122 with a first opening 1222 and a second opening 1224, and the first opening 1222 and the second opening 1224 each are connected to the accommodating space 120. An opening direction of the first opening 1222 is oriented perpendicular to an opening direction of the second opening 1224. The first opening 1222 is provided for an end of the flexible display screen assembly 30 to be passed therethrough, so that the end of the flexible display screen assembly 30 is connected to the reel 20. The second opening 1224 is provided for the driving mechanism 70 to be exposed from the accommodating space 120 and to be connected to the second portion 12.

Specifically, referring to FIGS. 3 and 8, in an embodiment of the present disclosure, the first opening 1222 may be opened along a longitudinal direction of the electronic device 100 and the second opening 1224 may be opened in a transverse direction of the electronic device 100. The number of the second openings 1224 may be two, and the two second openings 1224 are located on opposite sides of the first top plate 122 and are symmetrically disposed along the longitudinal direction.

The second portion 14 is movable relative to the first portion 12 in the transverse direction of the electronic device 100. In addition, the first portion 12 is provided with slide slots 124, which are used to cooperate with the second portion 14 to enable the second portion 14 to slide relative to the first portion 12.

It is to be noted that in the description of the present disclosure, it is to be understood that terms "center", "longitudinal", "transverse", "length", "width", "thickness", "top", "bottom", "vertical", "horizontal", "top", "bottom", "inside", "outside" indicate orientations or positional relationships based on orientations or positional relationships shown in the drawings and are intended merely to facilitate and simplify the description of the disclosure, not to indicate or imply that the device or element referred to must have a particular orientation, be constructed and operate in the particular orientation, and therefore are not to be construed as limiting the present disclosure. In addition, terms "first" and "second" are used for descriptive purposes merely and are not to be construed as indicating or implying relative importance or implicitly specifying the number of technical features indicated. Thus, the features defined with "first" and "second" may explicitly or implicitly include one or more of the described features. In the description of the present disclosure, "a plurality of" or "multiple" means two or more, unless otherwise expressly and specifically limited.

Referring to FIGS. 3, 5, and 7, the second portion 14 is disposed above the first portion 12, and the second portion 14 may also be substantially rectangular. The second portion 14 includes sliding portions 144 and a second top plate 142. The sliding portions 144 are connected to opposite sides of the second top plate 142 in the longitudinal direction and are provided substantially symmetrically. The sliding portions 144 are used to cooperate with the slide slot 124 of the first portion 12 such that the first portion 12 and the second portion 14 are slidably connected with each other, and the second top plate 142 and the first top plate 122 are fitted together. It should be noted that the term "fit" herein can be understood to mean that the second top plate 142 and the first top plate 122 are in contact but do not affect the sliding therebetween, or a gap between the second top plate 142 and the first top plate 122 can be understood to be within an assembly error.

It should be pointed that in the present disclosure, unless otherwise expressly specified and limited, a first feature being "above" or "under" a second feature may mean that the first feature and the second feature are contacted directly, or may mean that the first feature and the second feature are not directly contacted, and connected through another feature therebetween. Further, the first feature being "above", "on" and "over" the second feature may mean that the first feature is directly above and obliquely above the second feature, or merely means that a horizontal height of the first feature is higher than that of the second feature. The first feature being "below", "under" and "beneath" the second feature may mean that the first feature is directly below and diagonally below the second feature, or merely means that a horizontal height of the first feature is smaller than that of the second feature.

It should be understood that in an embodiment of the present disclosure, the second portion 14 may slide relative to the first portion 12 to move away from or closer to the first portion 12. In the embodiment, the first portion 12 and the second portion 14 moves away from each other, which means that the second portion 14 may slide relative to the first portion 12 and slide in a direction facing away from the first portion 12. Further, in the embodiment, the first portion 12 and the second portion 14 may also move towards each other, which means that the second portion 14 may slide relative to the first portion 12 and slide in a direction facing towards the first portion 12.

It also should be pointed that in the description of the present disclosure, it is to be stated that, unless otherwise expressly specified and limited, terms "mounted", "connected", "attached" should be understood in a broad sense, for example, it may be a fixed connection, or a removable connection, or a one-piece connection; it may be a mechanical connection; it may be a direct connection or an indirect connection through an intermediate medium; and it may be a connection within two elements or an interactive relationship between two elements. For those of ordinary skill in the art, a specific meaning of the above terms in the present disclosure can be understood on a case-by-case basis.

Referring to FIGS. 1, 4 and 5, in the embodiment, when the first portion 12 and the second portion 14 move towards each other to an extreme position (that is, when the first portion 12 and the second portion 14 move close to each other until the first portion 12 and the second portion 14 are fitted together), the first portion 12 and the second portion 14 integrally form (i.e., are a one-piece structure) a substantially rectangular housing 10. Referring to FIGS. 2, 6 and 7, the second portion 14 moves away from the first portion 12 when the first portion 12 and the second portion 14 are moving away from each other (i.e., when they are moving away from each other).

Referring to FIGS. 3, 5, and 7, the reel 20 is rotatably disposed onto the first portion 12, and the reel 20 is specifically rotatably disposed within the accommodating space 120. That is to say, the reel 20 is mounted on the first portion 12 and rotatable relative to the first portion 12. The reel 20 is used to connect to the driving mechanism 70, such that the reel 20 can rotate relative to the first portion 12 to release or wind up the flexible display screen assembly 30 when the reel 20 is driven by the driving mechanism 70.

It should be understood that the reel 20 being rotatably disposed onto the first portion 12 may mean that the reel 20 is mounted directly onto the first portion 12, or may means that the reel 20 is mounted onto the first portion 12 through other media.

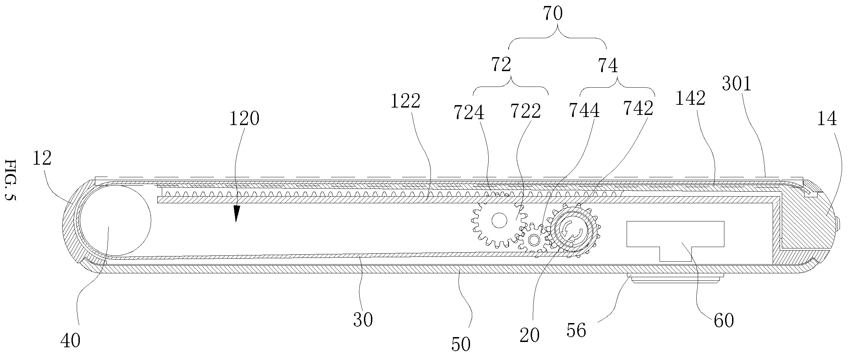

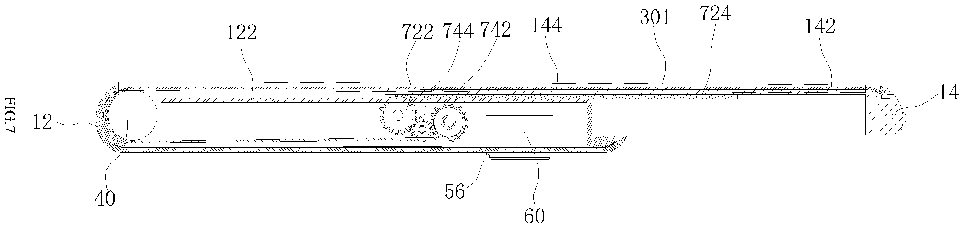

Further, referring further to FIGS. 5 and 7, an end of the flexible display screen assembly 30 is fixedly connected to the second portion 14 and another end of the flexible display screen assembly 30 is coiled onto the reel 20. The reel 20 can be used to reel in and release the flexible display screen assembly 30. Specifically, the reel 20 is capable of rotating to release the flexible display screen assembly 30 when the first portion 12 and the second portion 14 move away from each other, and thus a display portion 301 of the flexible display screen assembly 30 is expanded. Specifically, the end of the flexible display screen assembly 30 is fixedly connected to the second portion 14 and the other end is connected to the reel 20 disposed in the accommodating space 120 after passing through the first opening 1222 of the first portion 12.

As such, when the first portion 12 and the second portion 14 moves away from each other, the reel 20 can rotate to release the flexible display screen assembly 30, thereby expanding the display portion 301 of the flexible display screen assembly 30. In this way, a size of a screen display area of the electronic device 100 can be freely adjusted, and the display portion 301 of the flexible display screen assembly 30 can be expanded to improve operating experience of a user when a large screen is required. Further, when the large screen is not required, the display portion 301 is not required to be expanded, and thus an overall size of the flexible display screen assembly is smaller and portable.

It should be understood that, referring to FIG. 5, a case that the first portion 12 and the second portion 14 are closely connected together is shown, in this case, the display portion 301 of the flexible display screen assembly 30 is not expanded and the electronic device 100 is in a narrow screen mode. In this case, a part of the flexible display screen assembly 30 is coiled on the reel 20 and a part of the flexible display screen assembly 30 is located above the first top plate 122 above and exposed from the housing 10 for displaying. It should be noted that, in the embodiment, "display portion 301 of the flexible display screen assembly 30" can be understood as the portion located above the second top plate 142 of the second portion 14, i.e., the portion that is exposed from the housing 10.

Referring to FIG. 7, when the display portion 301 of the flexible display screen assembly 30 is required to be expanded, the first portion 12 and the second portion 14 move away from each other such that the second portion 14 enables the expanding of the flexible display screen assembly 30. Specifically, the scroll 20 releases the flexible display screen assembly 30, and thus allows the display portion 301 of the flexible display screen assembly 30 to increase in size, thereby improving operating experiences and requirements of the user. In this case, the electronic device 100 is in an expanded mode.

It should be understood that, there is a limit position when the second portion 14 and the first portion 12 move away from each other, and that when in the limit position, the display area of the electronic device 100 is the largest, that is to say, the area of the flexible display screen assembly 30 exposed from the housing 10 is the largest, also, the display portion 301 of the flexible display screen assembly 30 has the largest area (as shown in FIG. 7). When the first portion 12 and the second portion 14 are close together and connected to fit together, the display area of the electronic device 100 is the smallest, that is to say, the display portion 301 of the flexible display screen assembly 30 is the smallest, also, the display portion 301 of the flexible display screen assembly 30 has the smallest area (as shown in FIG. 5).

In the embodiment, the end of the flexible display screen assembly 30 being fixedly connected to the second portion 14 may mean that the end of the flexible display screen assembly 30 is fixed directly to the second portion 14, or may mean that the flexible display screen assembly 30 is fixed to the second portion 14 through other media. The end of the flexible display screen assembly 30 is not movable with respect to the second portion 14.

In the embodiment of the present application, the end of the flexible display screen assembly 30 refers to a first edge of the flexible display screen assembly 30; and the another end of the flexible display screen assembly 30 refers to a second edge opposite to the first edge of the flexible display screen assembly 30.

Referring to FIGS. 5, 7, and 8, the stopper 40 is rotatably disposed within the accommodating space 120 of the first portion 12 and exposed from the first opening 1222. An intermediate portion of the flexible display screen assembly 30 winds the stopper 40, and the stopper 40 is used to define a configuration of the flexible display screen assembly 30.

Specifically, the stopper 40 is in the form of a column. The stopper 40 is used to define the configuration of the flexible display screen assembly 30, support the flexible display screen assembly 30, and guide the expanding of the flexible display screen assembly 30. It will be understood that the middle portion of the flexible display screen assembly 30 can be understood to be the portion located between the two ends of the flexible display screen assembly 30.

Specifically, the stopper 40 may define the configuration of the flexible display screen assembly 30 such that the display portion 301 of the flexible display screen assembly 30 can be in a flat state, that is to say, the flexible display screen assembly 30 can be kept in a U-shaped state. Further, the stopper 40 may also guide the flexible display screen assembly 30 when the second portion 14 drives the flexible display screen assembly 30 into motion, to maintain smooth movement of the flexible display screen assembly 30.

Specifically, in the embodiment, the stopper 40 may be a plain shaft or a roller, and the middle portion of the flexible display screen assembly 30 winds the stopper 40. That is to say, an end of the flexible display screen assembly 30 is fixedly connected to the second portion 14, and another end is connected to the reel 20 after passing through the first opening 1222 and winding around the stopper 40. When the second portion 14 drives an end of the flexible display screen assembly 30 into motion, since friction exists between the stopper 40 and the flexible display screen assembly 30, the stopper gradually rotates under the driving of the flexible display screen assembly 30, the stopper 40 support members and guides the flexible display screen assembly 30, and the reel 20 gradually releases the end of the flexible display screen assembly 30.

Referring to FIGS. 5, 7 and 10, in the embodiment, the camera 60 can be disposed in the accommodating space 120 of the first portion 12, the cover body 50 is connected to the first portion 12 and covers the accommodating space 120, and the camera 60 is capable of performing image acquisition through the cover body 50. That is to say, in the embodiment, the first portion 12 and the cover body 50 are formed integrally (i.e., are a one-piece structure), and the camera 60 does not move relative to the first portion 12, when the second portion 14 moves relative to the first portion 12. The camera 60 is located in a middle of the entire flexible display screen assembly 30 when it is in the expanded mode.

In an embodiment, the cover body 50 is removably connected to the first portion 12, so that the cover body 50 can be easily removed for maintenance and replacement of electrical components such as the main board 101, the battery 102, or sensors arranged in the accommodating space 120 in a stacked manner. It should be understood that in another embodiment, the cover body 50 and the first portion 12 may be a one-piece structure, and are formed integrally. A specific arrangement manner thereof herein is not limited.

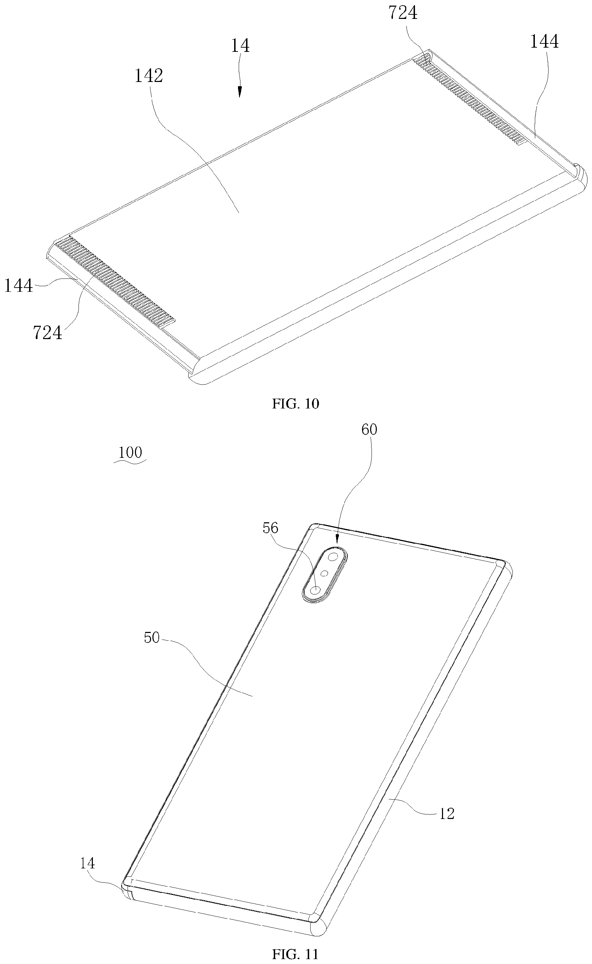

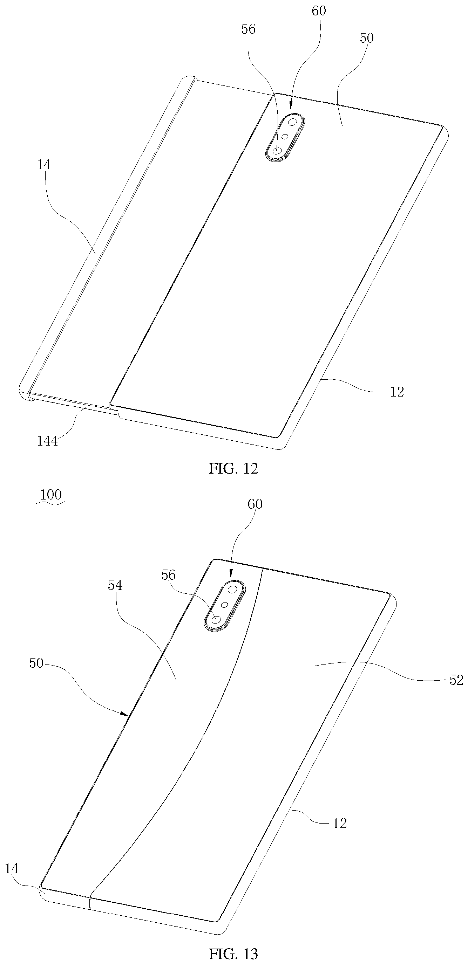

Further, referring to FIGS. 11 and 12, the cover body 50 may be disposed with a light-transmitting portion 56 at a position corresponding to that of the camera 60. Light may be transmitted through the light-transmitting portion 56 and received by the camera 60 to enable the camera 60 to perform image acquisition through the cover body 50 for external shooting. In this way, the light-transmitting portion 56 can protect the camera 60 without affecting the effectiveness of the camera 60 in taking pictures, for preventing the camera 60 from being exposed directly outside the housing 10 and causing accidental scratches to the camera 60. In this case, the camera 60 can be a rear camera of a mobile phone, and the rear camera can perform image acquisition through the light-transmitting portion 56 on the cover body 50. It will be understood that in some embodiments, the camera 60 may also be a front camera of the mobile phone, in this case, the camera 60 may perform the image acquisition through an aperture in the flexible display screen assembly 30 or an aperture in the housing 10. Also, an eject mechanism or a slide-out mechanism may be arranged, when the front camera is required to be used, the camera 60 can be ejected or slid out of the housing 10 through the eject mechanism or the slide out mechanism, which can improve a screen-tobody ratio of the electronic device 100.

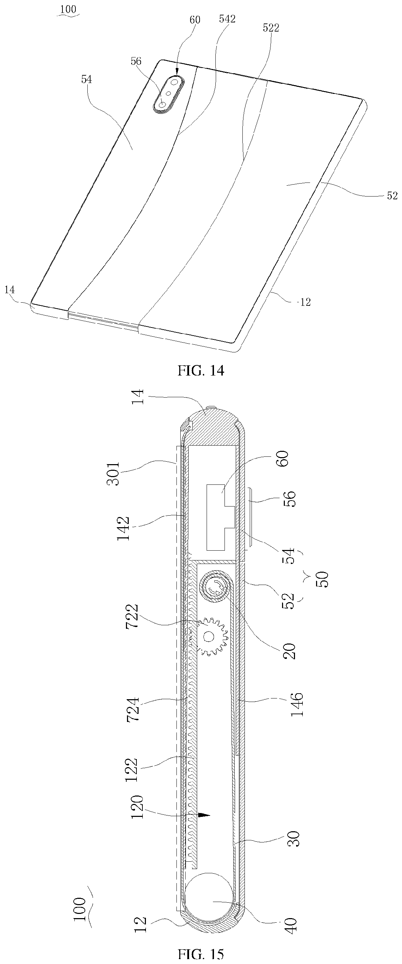

It should be understood, referring to FIGS. 13 and 14, that in another embodiment, the camera 60 may also be fixedly connected to the second portion 14 and capture images through the second portion 14. Specifically, in this embodiment, the second portion 14 is formed with a storage space 140 and the camera 60 is disposed within the storage space 140. Light can pass through the second portion 14, and can be received by the camera 60 to enable the camera 60 to capture images through the second portion 60. When the second portion 14 moves relative to the first portion 12, the camera 60 moves with the movement of the second portion 14. In this way, under a condition that a size of the display portion 301 of the flexible display screen assembly 30 can be adjusted, filming and photographing functions of the camera 60 will not be affected, so that the user can conveniently take pictures in any case.

In an embodiment of the present disclosure, the second portion 14 may further include a bottom plate 146. The bottom plate 146 and the second top plate 142 are oppositely arranged, and cooperatively defines the storage space 140. Specifically, the camera 60 may be set within the storage space 140 between the second top plate 142 and the bottom plate 146, i.e., the camera 30 may perform image acquisition through the bottom plate 146 of the second portion 14. Further, it should be understood that the camera 60 may also be merely partially located in the storage space 140, as long as normal filming and photographing functions of the camera 60 can be achieved, and a specific arrangement manner of the camera 60 is not limited herein.

Further, in the embodiment, in order to enable the camera 60 to take pictures and shoot properly, the bottom plate 146 may be opened with a through-hole corresponding to the camera 60, or the bottom plate 146 may have a light-transmitting area corresponding to the camera 60. As such, the camera 60 exposes through the through-hole or acquires images through the light-transmitting area. Light may pass through the through-hole or transmit through the light-transmitting area, and is received by the camera 60. The light-transmitting area may be made of a light-transmitting material such as glass.

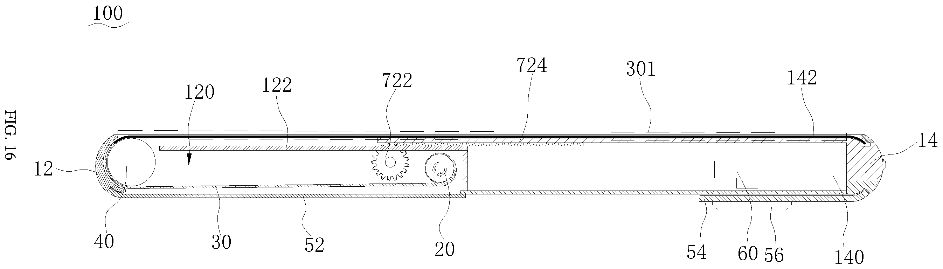

Further, referring to FIGS. 15 and 16, in an embodiment, the cover body 50 includes a first connecting portion 52 and a second connecting portion 54. The first connecting portion 52 is fixedly connected to a bottom of the first portion 12 and encloses the accommodating space 120, and the second connecting portion 54 is fixedly connected to a bottom of the second portion 14. The camera 60 is able to acquire images through the second connecting portion 54. That is, the second connection portion 54 is fixedly connected to the first portion 12, the second connection portion 54 is fixedly connected to the second portion 14, the second connection portion 54 is movable with respect to the first connection portion 52, and the camera 60 is able to follow the movement of the second portion 14.

Specifically, the second connecting portion 52 may be fixedly or detachably connected to a bottom of the bottom plate 146, and the second connecting portion 52 includes a light-transmitting portion 56 corresponding to the through-hole or light-transmitting area, that is to say, the camera 60, the through-hole (or light-transmitting area), and the light-transmitting portion 56 correspond to each other. In this way, the camera 60 can receive light through the through-hole (or light-transmitting area) and the light-transmitting portion 56 for image acquisition.

Referring to FIGS. 13 and 15, when the electronic device 100 is in a narrow screen mode, i.e., when the first portion 12 and the second portion 14 move towards each other and reach at a limit position, the first connecting portion 52 and the second connecting portion 54 are spliced together to cooperatively form the cover body 50 of the electronic device 100. Referring to FIGS. 14 and 16, when the second portion 14 moves away from the first portion 12, the second connecting portion 54 is separated from the second connecting portion 52.

Specifically, referring to FIGS. 13 and 14, in an embodiment, the first connection portion 52 is formed with a concave portion 542 that is curved, the second connection portion 54 is formed with a convex portion 522 that matches the concave portion 542, and the convex portion 522 is also curved. When the electronic device 100 is in the narrow screen mode (shown in FIGS. 13 and 15), the concave portion 542 and the convex portion 522 are spliced together to achieve the splicing of the first connection portion 52 and the second connection portion 54. It should be understood that the first connecting part 52 and the second connecting part 54 may also be made into other forms, for example, both of them are rectangular, and both of them can be directly spliced to form the cover 50. Alternatively, for example, one of them can be formed with regularly arranged bumps and the other one can be formed with grooves corresponding to the bumps, such that the form of the housing 10 can be enriched to improve the aesthetics when the electronic device 100 is in the expanded mode.

Further, in an embodiment, the first connection portion 52 and the second connection portion 54 may be designed with two different color effects, which may enrich an appearance of the electronic device 100.

Referring to FIGS. 3, 5, and 7, in an embodiment, the driving mechanism 70 may be disposed within the accommodating space 120 of the first portion 12. The driving mechanism 70 is connected to the second portion 14, and the driving mechanism 70 is used to drive the second portion 14 to move away from the first portion 12 to expand drive the flexible display screen assembly 30.

Further, referring to FIGS. 5 and 7, in the embodiment, the driving mechanism 70 may also be connected to the reel 20. When the driving mechanism 70 drives the second member 14 to move away from the first portion 12, the driving mechanism 70 may also simultaneously drive the reel 20 to rotate to release the flexible display screen assembly 30, thereby expanding the display portion 301 of the flexible display screen assembly 30.

Specifically, the driving mechanism 70 may include a motor 71, a first transmission structure 72, and a second transmission structure 74. The motor 71 may be fixedly disposed in the accommodating space 120 of the first portion 12. The first transmission structure 72 is connected to the second portion 14 and the motor 71, and the second transmission structure 74 is connected to the first transmission structure 74 and the reel 20. The motor 71 is used to drive the second portion 14 to move relative to the first portion 12 through the first transmission structure 72, and used to drive the reel 20 to rotate through the first transmission structure 72 and the second transmission structure 74.

The first transmission structure 72 may include a first transmission gear 722 and a rack 724. The first transmission gear 722 is connected to the second transmission structure 74 and fixed to a motor shaft 711 of the motor 71. The rack 724 is fixedly connected to the second portion 14, and the rack 724 meshes with the first transmission gear 722. As such, in the embodiment, the gear and the rack are used cooperatively for driving, a corresponding structure is simple and transmission thereof is more smooth and reliable.

Specifically, in an embodiment, the rack 724 is integrally formed with the second top plate 142 of the second portion 14, that is, the rack 724 may be integrally formed directly on a lower surface of the second top plate 142. As such, the rack 724 may be machined and formed directly on the second top plate 142, thereby bringing better integrity and ease of processing. It should be understood that, in other embodiments, the rack 724 may also be formed separately from the second portion 14, and then the two are fixedly connected together by welding and the like, which is not limited herein.

Referring again to FIGS. 5 and 7, the second transmission structure 74 is connected to the reel 20 and the first transmission gear 722. The second transmission structure 74 includes a second transmission gear 742 and a third transmission gear 744. The second transmission gear 742 is fixed to the reel 20 and is set concentrically with the reel 20. The third transmission gear 744 is rotatably set on the first portion 12. The third transmission gear 744 is connected to the second transmission gear 742 and the first transmission gear 722, i.e., the third transmission gear 744 is meshed with the second transmission gear 742 and the first transmission gear 722 individually, and the first transmission gear 722 and the second transmission gear 742 are located on opposite sides of the third transmission gear 744.

In the embodiment, the motor 71 may be used to drive the second portion 14 to move relative to the first portion 12 through the first transmission structure 72. Further, the motor 71 may also be used to driving the reel 20 to rotate to release the flexible display screen assembly 30 through the second transmission structure 74, while driving the second portion 14 to move away from the first portion 12. In this way, synchronization between the expanding of the flexible display screen assembly 30 and the release of the reel 20 results in a smoother movement, and thus the flexible display screen assembly 30 is less prone to wrinkling.

Specifically, when it is required to expand a displaying area of the electronic device 100, i.e., to expand the display portion 301 of the flexible display screen assembly 30, the motor 71 drives the first transmission gear 722 to rotate, and the first transmission gear 722 drives the second portion 14 through the rack 724 to move away from the first portion 12. The second portion 14 drives the expanding of the flexible display screen assembly 30, i.e., drives an end of the flexible display screen assembly 30 to move away from the first portion 12. Simultaneously, the first driving gear 722 may also drive the third driving gear 744 to rotate, and the third driving gear 744 drives the reel 20 to rotate, thereby enabling the reel 20 to synchronously release the flexible display screen assembly 30, thereby achieving the purpose of expanding the display portion 301 of the flexible display screen assembly 30.

It should be understood that, when the display portion 301 of the flexible display screen assembly 30 is required to be reduced, it is merely required to cause the motor 71 to reverse, thereby driving the second portion 14 to move towards the first portion 12. In this case, the second portion 14 gradually releases the flexible display screen assembly 30 and the reel 20 is able to gradually wind up the flexible display screen assembly 30. It should be understood that in an embodiment of the present disclosure, a movement stroke of the second portion 14 is equal to a length of the flexible display screen assembly 30 released by the rotation of the reel 20 in a unit time. That is to say, for as much distance as the second portion 14 pulls an end of the flexible display screen assembly 30 into motion, the reel 20 rotates to release as much length corresponding to the distance, thereby ensuring that the flexible display screen assembly 30 can move smoothly without creasing.

Further, It should also be understood that in some embodiments, in order to ensure smooth winding and releasing of the flexible display screen assembly 30 by the reel 20, the number of driving mechanisms 70 may be two and the number of reels 20 may also be two. The two driving mechanisms 70 may be disposed symmetrically in the longitudinal direction of the electronic device 100 in the accommodating space 120 and respectively connected to the second portion 14, and respectively connected to the two reels 20. In this way, synchronous and smooth rotation of the two reels 20 and smooth movement of the second portion 14 can be achieved by synchronous driving of the two identical driving mechanisms 70, thereby ensuring reliability of the movement of the electronic device 100 during expanding the display portion 301 of the flexible display screen assembly 30.

Further, in some other embodiments, the driving mechanism 70 may also include two synchronized motors 71 disposed on the first portion 12. One of the two motors 71 is used to drive the second portion 14 to move relative to the first portion 12 and the other motor 71 is used to drive the reel 20 to rotate, that is to say, the second portion 14 and the reel 21 are driven by separate motors 71. In this way, the synchronized movement of the two motors 71 can likewise ensure smoothness of the movement as well as the reliability of the movement of the flexible display screen assembly 30.

Further, in this embodiment, the driving mechanism 70 drive the second portion 14 and the reel 20 by means of a gear transmission and a rack and pinion transmission. It should be understood that in other embodiments, the driving mechanism 70 may also drive the second portion 14 and the reel 20 by way of a combination of a belt transmission and a rack and pinion transmission or a combination of a chain drive and rack and a rack and pinion transmission. For example, the first transmission structure 72 may adopt a rack and pinion transmission and the second transmission structure 74 may adopt a belt transmission or a chain transmission, which is not limited herein.

In addition, in some implementations, the driving mechanism 70 may include only a motor disposed on the first portion 12 and a first transmission structure 72 connected to the motor, and the motor may drive the second portion 14 to move relative to the first portion 12 through the first transmission structure 72. In addition, the electronic device 100 may further include a return structure 80. The return structure 80 is connected to the reel 20, and the return structure 80 is used to apply a force onto the flexible display screen assembly 30 through the reel 20 to maintain the tendency of the flexible display screen assembly 30 to wind the reel 20.

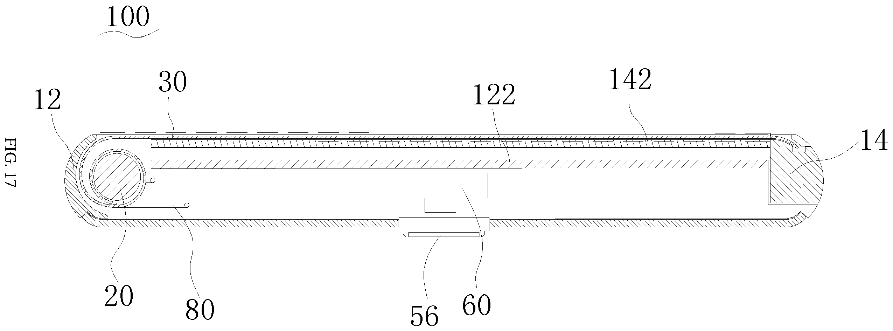

Further, referring to FIG. 17, in some embodiments, the driving mechanism 70 may include a motor disposed on the first portion 12 and a first transmission structure 72 connected to the motor, and the motor may drive the second portion 14 to move relative to the first portion 12 through the first transmission structure 72. In this case, the second transmission structure 74 may be omitted.

Further, referring to FIGS. 17 to 20, in an embodiment, the electronic device 100 may further include a return mechanism 80, which may also be disposed within the accommodating space 120. The return mechanism 80 is connected to the reel 20, and the return mechanism 20 is used to apply a return force onto the flexible display screen assembly 30 to maintain the tendency of the flexible display screen assembly 30 to wind on the reel 20.

Specifically, the return mechanism 80 applies a return force to the reel 20, and the reel 20 causes the flexible display screen assembly 30 to maintain the tendency to wind on the reel 20 under the return force. That is to say, when the second portion 14 is not applied on an external force to move relative to the first portion 12, the return force of the return mechanism 80 causes the reel 20 to rotate such that an end of the flexible display screen assembly 30 winds on the reel 20. In this case, the first portion 12 and the second portion 14 fit together perfectly and the electronic device 100 is in a narrow screen mode.

When the second portion 14 is subjected to an external force (e.g., a force applied by the driving mechanism 70 on the second portion 14) and the external force is greater than or equal to the return force of the return mechanism 80, the second portion 14 will move away from the first portion 12, thereby driving the reel 20 to rotate against the return force, and thus release the flexible display screen assembly 30, thereby expanding the display portion 301 of the flexible display screen assembly 30.

It should be understood that, due to the presence of the return mechanism 80, the return mechanism 80 will always apply a tension to the flexible display screen assembly 30 during the expansion of the display portion 301 of the flexible display screen assembly 30, thereby enabling winding-up and expanding balance of the flexible display screen, i.e., keeping the flexible display screen assembly 30 to be flat at all times.

It is also understood that in other embodiments, in a case that the electronic device 100 includes the return mechanism 80, the driving mechanism 70 may also include a motor, a first transmission structure 72 and a second transmission structure 74 described in the above embodiment. The first transmission structure 72 is connected to the second portion 12 of the motor and the second transmission structure 74 is connected to the first transmission structure 72 and the reel 20. In such embodiments, when the display portion 301 is required to be reduced, the motor may not operate, but instead the return force of the return mechanism 80 is used to drive the reel 20 to reverse to wind up the flexible display screen assembly 30 and drive the second portion 14 to move towards the first portion 12, i.e., closer to the first portion 12.

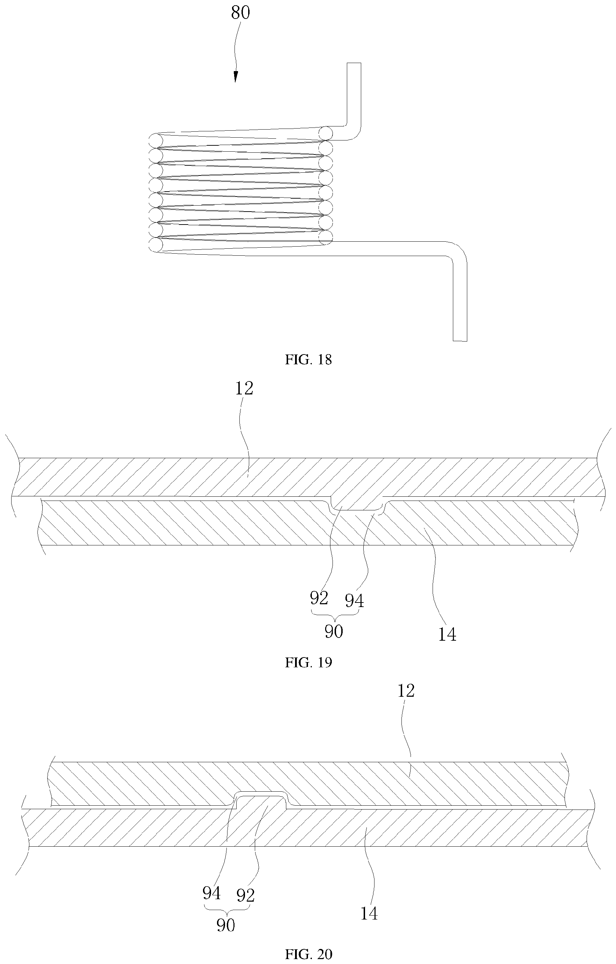

Further, referring to FIG. 18, the return mechanism 80 may include a resilient element, which is connected to the reel 20 and used to apply a return force to the reel 20. The resilient element may be a spring, such as a torsion spring as shown in FIG. 18. Further, the resilient element may also be an element having an elastic return force such as rubber, which is not limited herein.

Further, referring to FIG. 19, in an embodiment, the electronic device 100 may further include a snap-in structure 90. The snap-in structure 90 is disposed on the housing 10. The snap-in structure 90 is used to limit rotation of the reel 20, when the second portion 14 is moved to a predetermined position relative to the first portion 12. That is to say, the snap-in structure 90 prevents the second portion 14 and the flexible display screen assembly 30 from retracting under the action of the return force of the return mechanism 80, when the second portion 14 moves to the predetermined position relative to the first portion 12.

Specifically, referring to FIG. 19, in this embodiment, the snap-in structure 90 may include a snap block 92 formed in the first portion 12 and a slot 94 formed in the second portion 14. The snap block 92 snap-fits in the slot 94 when the second portion 14 moves to a predetermined position relative to the first portion 12. In this way, even if an external force applied on the second portion 14 is withdrawn, the second portion 14 and the flexible display screen assembly 30 will not retract under the action of the return force of the return mechanism 80 since the snap block 92 and the slot 94 snap-fit, thereby ensuring that the electronic device 100 is in the expanded mode.

It is noted that the above "predetermined position" may be a relative position of the first portion 12 and the second portion 14, when the second portion 14 moves away from the first portion 12 to the limit position, or may be any position before the limit position.

It should be understood that, referring to FIG. 20, in other embodiments, the slot 94 may be formed in the first portion 12 and the snap block 92 may be formed in the second portion 14. In addition, in some embodiments, the snap block may be formed in the first portion 12 and the slot may be formed in the reel 20; and when the second portion 14 moves to a predetermined position, the snap block and slot snap-fit, in this case, the snap block and the slot can be made to snap-fit by means of manual pressure or by means of electrical actuation, such that the reel does not rotate relative to the first portion, and thus the second portion 14 and the flexible display screen assembly 30 do not retract under the action of the return mechanism 80. Further, in some other embodiments, the snap-in structure 90 may further include a snap member, and the return mechanism 80 includes a torsion spring. The torsion spring can snap against the torsion spring to counteract the return force of the torsion spring when the second portion 14 moves to a predetermined position. It should also be understood that in some embodiments, the snap structure 90 may further include a resilient assembly disposed in the first portion 12 and a first snap portion formed on the second portion 14. The resilient assembly may include a press member, a spring, and a second snap portion. The press member is mounted in the first portion 12, and the spring is connected to the press member and the second snap portion. The press member may be used to actuate the second snap portion by means of the spring under the action of an external force to snap with the first snap portion, thereby defining a relative position of the first portion 12 and the second portion 14. In this way, when the second portion 14 moves to a predetermined position, the user can keep the electronic device 100 in the expanded mode by pressing the press member, such that the first snap portion and the second snap portion snap-fit to prevent the second portion 14 from retracting under the action of the return force of the return mechanism 80. It should be appreciated that, upon pressing the press member again, the first snap portion and the second snap portion are separated, thereby allowing the second portion 14 and the flexible display screen assembly 30 to retract under the action of the return mechanism 80 to make the electronic device 100 return to the narrow screen mode from the expanded mode.

A working principle of the electronic device 100 of the present embodiment is described hereinafter.

Referring to FIGS. 4 to 7, as described above, the electronic device 100 is capable of switching between the narrow screen mode and the expanded mode. As shown in FIGS. 4 and 5, the electronic device 100 is in the narrow screen mode; and as shown in FIGS. 6 and 7, the electronic device 100 is in the expanded mode. In the narrow screen mode, the first portion 12 and the second portion 14 cooperate with each other to form the housing 10; and an end of the flexible display screen assembly 30 is rolled on the reel 20 and another end of the flexible display screen assembly 30 is connected to the second portion 14. In this case, only a smaller portion of the flexible display screen assembly 30 is exposed from the housing 10, and the display portion 301 is narrower, so that the electronic device 100 can be easily carried by the user.

When the user needs a larger display portion 301, the second portion 14 can be driven by the driving mechanism 70 to move away from the first portion 12. In this case, the second portion 14 drives an end of the flexible display screen assembly 30 to move, while the driving mechanism 70 also drives the scroll 20 to rotate and release the flexible display screen assembly 30. Therefore, a hidden portion of the flexible display screen assembly 30 in the housing 10 is gradually pulled out by the second portion 14 (i.e., changed from a state shown in FIG. 4 to a state shown in FIG. 6), thus achieving the purpose of expanding the display portion 301 of the flexible display screen assembly 30. As such, an area of the display portion 301 is larger, which can facilitate operation of the user and can improve the user's operating experience.

When it is required to switch from the expanded mode to the narrow mode, it is only required to make the motor 71 of the driving mechanism 70 reverse, to drive the second portion 14 to move towards the first portion 12, and thereby to release the flexible display screen assembly 30. In this case, the reel 20 also correspondingly reverses, and synchronously winds up the flexible display screen assembly 30. When a limiting position of movements in facing directions between the first portion 12 and the second portion 14 is reached, the motor 71 stops running, and the electronic device 100 returns to the narrow mode.

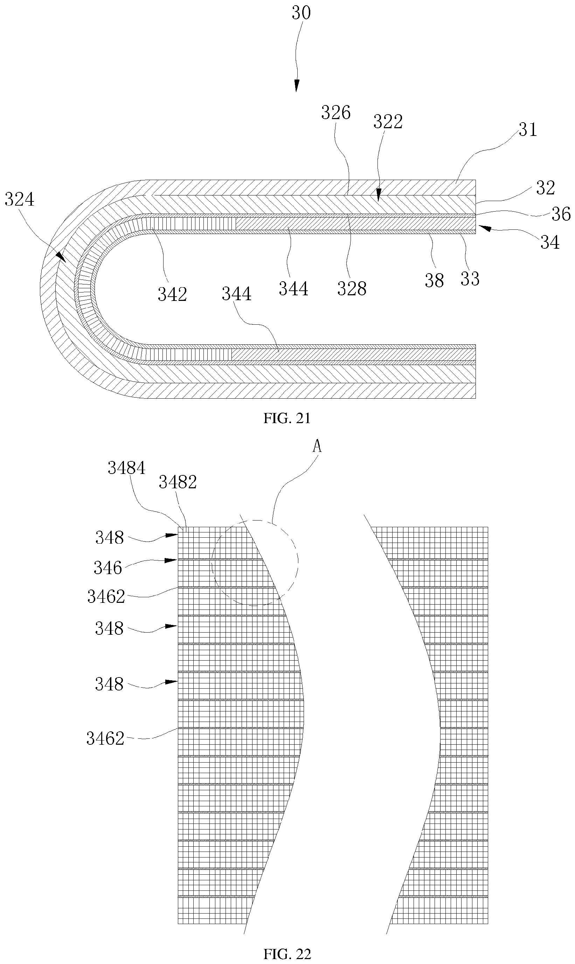

Referring to FIG. 21, in some embodiments of the present disclosure, the flexible display screen assembly 30 may include a flexible display screen 32 and a support assembly 34. The flexible display screen 32 and the support assembly 34 are stacked arranged and fixedly connected.

The flexible display screen 32 includes a flat region 322 and a bending region 324 connected to the flat area 322. In the embodiment, the s flat region 322 may be understood as an area that remains flat during expansion or reduction of the display portion 301, and the bending region 324 may be understood as an area that tends to be bent during expansion or reduction of the display portion 301. Specifically, in the embodiment shown in FIG. 5, the bending region 324 may include a part of the flexible display screen 32 that winds the stopper 40 and a portion that passes through the stopper 30 during expansion or reduction of the display portion 301.

Referring to FIGS. 21 through 25, the flexible display screen 32 may include a first surface 326 and a second surface 328 opposite the first surface 326. The flexible display screen 32 displays through the first surface 326. The support assembly 34 is fixedly connected to and covers, for example, completely covers, the second surface 328 of the flexible display screen 32. The support assembly 34 includes multiple support members 342, a support plate 344, a first flexible member 346, and a second flexible member 348. The multiple support members 342 is affixed to the bending region 324 and the support plate 344 is affixed to the flat region 322. It should be understood that, in other embodiments, the support assembly 34 may partially cover the second surface 328, for example, covering a region of the flexible display screen 32 used for bending.

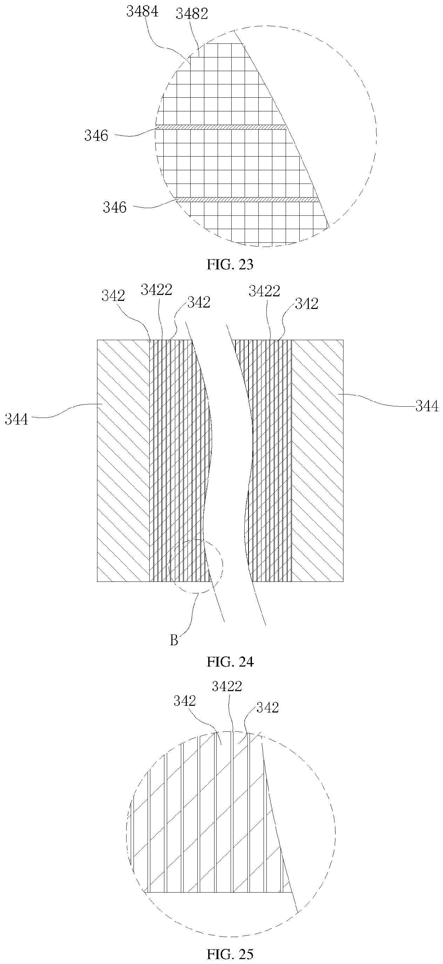

Further, referring to FIGS. 24 and 25, the multiple support members 342 are disposed side-by-side (i.e., in parallel). Every adjacent two of the support members 342 have a gap 3422 formed therebetween. The gaps 3422 are used for the first flexible member 346 to be passed through so that the first flexible member 346 winds the multiple support members 342. The multiple support members 342 may be made by a metal material with a high hardness and a high strength or a non-metal material with a high hardness and a high strength, the material of which is not limited herein, as long as the multiple support members 342 are hard and strong enough to allow the support assembly 34 to be bent and flatten. The multiple support members 342 are affixed to the bending region 324 of the flexible display screen 32 to enable the multiple support members 342 to act as a force body when the flexible display screen assembly 30 is bent, thereby reducing risk of damage to the flexible display screen 32 and improving the service life of the flexible display screen 32.

The support plates 344 are affixed to the flat region 322, and the support plates 344 are used to support the flat region 322 of the flexible display screen 32, and the support plates 344 may also be a metal material with a high hardness and a high strength or a non-metal material with a high hardness and a high strength. Specifically, when the flexible display screen assembly 30 is bent, only the bending region 324 is bent, but the flat region 322 is in a flat state all the time, such that the support plate 344 can be merely arranged to support the flat region 322 without arranging other structures.

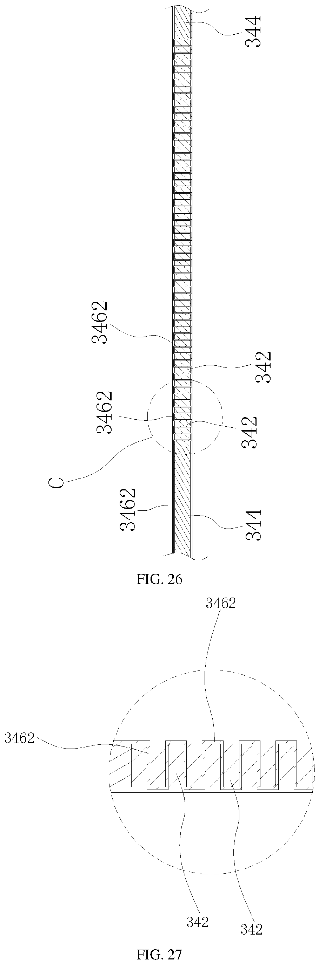

Referring to FIGS. 26 and 27, the first flexible member 346 sequentially passes through a gap 3422 between each adjacent two support members 342 and winds around the multiple support members 342. That is to say, there are multiple gaps 3422, and the first flexible member 346 sequentially passes through the multiple gaps 3422. Specifically, the first flexible member 346 may include a first connecting line 3462, and there are multiple first connecting lines 3462. Each of the first connecting lines 3462 sequentially passes through the gaps 3422 and winds around the support member 342. In this way, the first connecting lines 3462 may connect the multiple support members 342, thereby enabling the support assembly 34 to bend.

Further, in the embodiment shown in FIGS. 26 and 27, each of the first connecting lines 3462 passes through and fills the gaps 3422. After each first connecting lines 3462 passes through the gaps 3422 and winds the multiple support members 342, the first connecting line 3462 can be connected to the multiple support members 342 by solid adhesive, thereby achieving a fixed connection between the first connecting line 3462 and the multiple support members 342. In this way, the first connecting line 3462 fills the gaps 3422 to enable the multiple support members 342 to be connected together. Therefore, when the flexible display screen assembly 30 is bent, the multiple support members 342 can bend and act as a force body, thereby reducing the risk of damage to the flexible display screen 32.

Specifically, referring to FIGS. 26 and 27, in this embodiment, the first connecting line 3462 is inserted downwardly into a first gap starting at an end of the multiple support members 342, then upwardly into a second gap after winding around a support member 342, then downwardly into a third gap after winding around another support member 342, and so on until the first connecting line 3462 sequentially passes through all of the gaps and fills the gaps.

In an embodiment, the first connecting thread 3462 may be a textile thread, which is easily accessible and capable of being bent and twisted at will, such that the textile thread can fill the gaps 3422 and can wind only the multiple support members 342, thereby connecting the multiple support members 342. It should be understood that, in other embodiments, the first connecting thread 3462 may be other connecting threads that can be bent at will, such as a flexible rubber thread, etc. It should be understood that, in other embodiments, the first connecting line 3462 may also be another connecting line that can be bent at will, such as a flexible rubber wire, etc. In addition, it should be understood that, in some embodiments, the first flexible member 346 may also be in the form of a sheet, such as a rubber sheet, which may be arbitrarily bent, such that it may also sequentially pass through the multiple gaps and winds the multiple support members 342 and connect the multiple support members 342. In this case, the sheetshaped first flexible member 346 may cover a larger area of the support member 342, and thus separation of the multiple support members 342 due to fracture of the first flexible member 346 can be prevented.

Referring to FIGS. 22 to 23 and FIGS. 28 to29, in this embodiment, the second flexible member 348 is arranged stacked with the multiple support members 342 and is fixedly connected to the multiple support members 342. The second flexible member 348 covers upper and lower surfaces of the multiple support members 342. The second flexible member 348 is disposed staggered with the first flexible member 346, that is, the second flexible member 348 is disposed in an area of the multiple support members 342 that is not covered by the first flexible member 346.

The second flexible member 348 is a mesh structure, which includes multiple second connecting lines 3482 and multiple third connecting lines 3484. The multiple second connecting lines 3482 are arranged at intervals, and the multiple third connecting lines 3484 are also arranged at intervals. The second connecting lines 3482 and the third connecting lines 3482 are crossed. That is, the second connecting lines 3482 and the third connecting lines 3484 have cross-connection points. In the embodiment shown in FIGS. 22 and 23, the multiple second connecting lines 3482 are arranged in parallel and at intervals. The multiple third connecting lines 3484 are also arranged in parallel, and cross vertically with the second connecting lines 3482 to form a mesh structure. It should be understood that, in other embodiments, the third connecting lines 3484 and the second connecting lines 3482 may also be disposed not vertically, such as at an acute angle. In this embodiment, the second connecting line 3482 and the third connecting line 3484 may also be textile threads. The second flexible member 348 may also be fixedly connected to the support plate 344 by solid adhesive.

It should be understood that, in this embodiment, since the first flexible member 346 sequentially passes through the gaps 3422 and winds around the multiple support members, and the second flexible member 348 covers the multiple support members 342 and is staggered from the first flexible member 346, the multiple support members 342 can be connected together by the first flexible member 346. Further, since the second flexible member 348 is the mesh structure and covers the support members 342, it can be ensured that the multiple support members 342 are in a connected state during the bending process and cannot be separated.

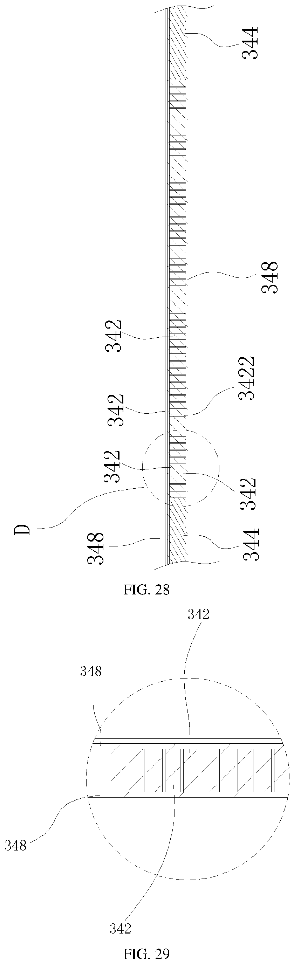

In the embodiment shown in FIGS. 28 and 29, the second flexible member 348 covers the upper and lower surfaces of the multiple support members 342 individually. It should be understood that, in other embodiments, the second flexible member 348 may also cover merely one of the upper and lower surfaces of the support members 342. Alternatively, in some embodiments, the second flexible member 348 is not disposed staggered with the first flexible member 346, but covers the first flexible member 346 and the support members 342 and is connected to the first flexible member 346 and the support members 342 by solid adhesive.

Further, it should be understood that, in this embodiment, the support assembly 34 includes multiple support members 342 and a support plate 344. The multiple support members 342 is disposed in the bending region 324, and the support plate 344 is disposed in the flat region 322. It should be understood that, in other embodiments, the support assembly 34 may also not include the support plate 344, but rather the multiple support members 342, which completely cover the bending region 324 and flat region 322 of the flexible display screen 32. In this way, the bending region 324 of the flexible display screen 32 will be larger, which may enable the flexible display screen 32 to adapt to more application scenarios, for example, to achieve arbitrary bending and curling of the flexible display screen 32, etc. Referring to FIG. 21, in some embodiments, the flexible display screen assembly 30 may further include a cover plate 31 covering an upper surface of the flexible display screen 32, and the flexible display screen 32 is capable of performing luminous display through the cover plate.

In this way, the cover plate 31 is able to protect the flexible display screen 32 to avoid damage to the flexible display screen 32. In this embodiment, the cover 31 may be a polyphthalimide film (a PI protective film, polyimide filin). As such, the cover 31 can not only protect the flexible display screen 32, but also not affect the bending of the flexible display screen assembly 30.

In some embodiments, the flexible display screen 32 may include a display layer, a touch layer, and an optical clear adhesive (OCA) layer connecting the display layer and the touch layer. In addition, the flexible display screen 32 may include a polarizing sheet, which covers the display layer, and the polarizing sheet is primarily used to polarize light, thereby enabling a user to see what is displayed on the flexible display screen 32. It should be understood that, in some embodiments, the flexible display screen 32 may also include protective elements such as a shielding film and a foam layer stacked with the display layer. The shielding film can be connected to the display layer to play a role in reducing or eliminating electromagnetic interference to internal wiring of the display layer, and the foam layer can protect the flexible display to avoid damage to the flexible display under the action of external forces.

Further, in some embodiments, the flexible display screen assembly 30 may further include a film layer 33, which is stacked with the support assembly 34 and covers the support assembly 34. Specifically, the film layer 33 is disposed on a lower surface of the support assembly 34 and covers the lower surface of the support assembly 34. In this way, the film layer 33 protects the support assembly 34 to prevent the support assembly 34 from falling or being accidentally damaged. Specifically, the film layer 33 may include a protective film having flexible bending properties such as a solid adhesive protective film.

In addition, in some embodiments, the support assembly 34 may be made by the following steps: providing multiple support members 342 and multiple support plates 344, positioning the multiple support members 342 and the multiple support plates 344, forming a gap 3422 between each adjacent two of the multiple support members 342;
providing a first flexible member 346, enabling the first flexible member 346 to pass through the gaps 3422 and wind around the multiple support members 342;
providing a second flexible member 348, covering upper and lower surfaces of the multiple support members 342 and upper and lower surfaces of the multiple support plates 344 by the second flexible member 348, and arranging the second flexible member 348 to be staggered with the first flexible member 346; and
applying a gel to the multiple support members 342 and the multiple support plates 344, so as to secure the first flexible member 346 and the second flexible member 348 to the multiple support members 342 and the multiple support plates 344.

In addition, in some embodiments, the flexible display screen assembly 30 may be made by the following steps:
providing a flexible display screen 32;
providing a support assembly 34, arranging the support assembly 34 to be stacked with the flexible display screen 32, and fixedly connecting the support assembly 34 and the flexible display screen 32; and
applying a film layer 33 to a lower surface of the support assembly 34.

It should be understood that the above support assembly 34 may be made through steps S10 to S40.

In summary, the flexible display screen assembly 30 of the embodiment of the present disclosure includes a flexible display screen 32 and a support assembly 34 arranged stacked with the flexible display screen 32. The support assembly 34 includes multiple support members 342 and a first flexible member 346. The multiple support members 342 are disposed side by side. Every adjacent two of the multiple support members 342 have a gap 3422 formed therebetween. The first flexible member 346 sequentially passes through the gaps 3422 and winds the multiple support members 342.

An electronic device 100 of an embodiment of the present disclosure includes a housing 10 and a flexible display screen assembly 30, and the flexible display screen assembly 30 is disposed in the housing 10.

An electronic device 100 of another embodiment of the present application includes a housing 10 and a flexible display screen assembly 30, and the housing 10 includes a first portion 12 and a second portion 14 movable relative to each other. An end of the flexible display screen assembly 30 is connected to the second portion 14 and another end is disposed within the housing 10. The flexible display screen assembly 30 includes a flexible display screen 32 and a support assembly 34 stacked with the flexible display screen 32. The support assembly 34 includes multiple support members 342 and a first flexible member 346. The multiple support members 342 are disposed side by side, and every adjacent two of the multiple support members 342 have a gap 3422 formed therebetween. The first flexible member 346 is sequentially passes through the gaps 3422 and winds the multiple support members 342.

Specifically, a part of the flexible display screen assembly 30 located in the housing 10 at least partially extends out of the housing 10 when the first portion 12 and the second portion 14 move away from each other, to expand the display portion 301 of the flexible display screen 31.

It should be understood that, in a related art, when the flexible display screen is rolled up, the flexible display screen tends to be bent and stretched repeatedly. In such a case, the flexible display, as a main force carrier, is easy to destroy the flexible display screen when being repeatedly bent and stretched, which reduces the life of the flexible display screen. Therefore, how to ensure the life of the screen and reduce the risk of screen damage has become an urgent technical problem to be solved.

In the flexible display screen assembly 30 and the electronic device 100 of the embodiments of the present disclosure, the first flexible member 346 sequentially passes through the gaps 3422 between each adjacent two of the multiple support members 342 and winds the multiple support members 342, such that the first flexible member 346 can connect the multiple support members 342 to enable the support assembly 34 to be bent. As such, when the flexible display screen assembly 30 is bent and telescoped, the support assembly 34 can act as a force subject to achieve the transformation of a bending state and an expanding state of the flexible display screen 32, thereby avoiding the flexible display screen 32 in the flexible display screen assembly 30 from acting as a force subject, reducing the risk of damage to the flexible display screen 32, and enhancing service life thereof.

In the description of this specification, description of reference terms "certain embodiments", "one embodiment", "some embodiments", "exemplary embodiments", "examples", "specific examples" or "some examples" means that the specific features, structures, materials or characteristics described in connection with the embodiments or examples are included in at least one embodiment or example of the present disclosure. In this specification, schematic expressions of the above terms do not necessarily refer to the same embodiment or example. Furthermore, specific features, structures, materials or characteristics described may be combined in any one or more embodiments or examples in a suitable manner.

Although the embodiments of the present disclosure have been shown and described above, it should be understood that the above-mentioned embodiments are illustrative and should not be construed as limitations of the present disclosure. Those skilled in the art can make changes, modifications, substitutions and variations to the above-mentioned embodiments within the scope of the present disclosure, which is defined by the claims and their equivalents.

## Claims

1. A flexible display screen assembly, comprising:
a flexible display screen; and
a support assembly, stacked with the flexible display screen and comprising a plurality of support members and a first flexible member; wherein the plurality of support members are arranged in parallel, every adjacent two of the plurality of support members have a gap formed therebetween, and the first flexible member sequentially passes through the gaps and winds the plurality of support members.

2. The flexible display screen assembly according to claim 1, wherein the first flexible member comprises first connecting lines, and the first connecting lines sequentially pass through the gaps and wind the plurality of support members.

3. The flexible display screen assembly according to claim 1, wherein the support assembly further comprises a second flexible member; and the second flexible member is stacked and fixedly connected with the plurality of support members, and covers the plurality of support members.

4. The flexible display screen assembly according to claim 3, wherein the second flexible member is a mesh structure; and
wherein the second flexible member comprises: a plurality of second connecting lines arranged at intervals, and a plurality of third connecting lines arranged at intervals and crossing with the plurality of second connecting lines.

5. The flexible display screen assembly according to claim 4, wherein the first flexible member and the second flexible member each are fixedly connected to the plurality of support members through solid adhesive.

6. The flexible display screen assembly according to claim 1, wherein the flexible display screen comprises a first surface and a second surface opposite to the first surface, the flexible display screen is configured to display through the first surface, and the support assembly covers the second surface.

7. The flexible display screen assembly according to claim 1, wherein the flexible display screen comprises a flat region and a bending region, and the plurality of support members are attached onto the bending region.

8. The flexible display screen assembly according to claim 7, wherein the support assembly further comprises a support plate, and the support plate is attached onto the flat region.

9. The flexible display screen assembly according to claim 1, wherein the flexible display screen assembly further comprises a film layer, and the film layer is stacked with the support assembly and covers the support assembly.

10. The flexible display screen assembly according to claim 1, wherein the first flexible member comprises a textile thread.

11. The flexible display screen assembly according to claim 1, wherein the flexible display screen assembly further comprises a cover plate covering the flexible display screen, and the flexible display screen is configured to perform luminous display through the cover plate.

12. An electronic device, comprising:
a housing; and
a flexible display screen assembly, disposed on the housing;
wherein the flexible display screen assembly comprises: a flexible display screen, and a support assembly stacked with the flexible display screen; the support assembly comprises a plurality of support members, and a first flexible member; the plurality of support members are arranged in parallel, and every adjacent two of the plurality of support members have a gap formed therebetween; and the first flexible member passes through the gaps sequentially and winds the plurality of support members.

13. The electronic device according to claim 12, wherein the housing comprises a first portion and a second portion movable with respect to each other; and
wherein the electronic device further comprises a reel, an end of the flexible display screen assembly is connected to the second portion, and another end of the flexible display screen assembly is arranged on the reel;
wherein the reel is configured to rotate to release the flexible display screen assembly and thereby expand a display portion of the flexible display screen assembly, when the first portion and the second portion move away from each other.

14. The electronic device according to claim 13, wherein the electronic device comprises a driving mechanism, and the driving mechanism is connected to the second portion; and the driving mechanism is configured to drive the second portion to move away from the first portion and thereby drive the flexible display screen assemble to move to expand the display portion of the flexible display screen.

15. The electronic device according to claim 14, wherein the driving mechanism comprises a motor, and a first transmission structure connected to the motor and the second portion; and the motor is configured to drive the second portion to move relative to the first portion through the first transmission structure.

16. The electronic device according to claim 15, wherein the first transmission structure comprises a first transmission gear connected to the motor, and a rack portion fixed onto the second portion; and the rack portion is meshed with the first transmission gear.

17. The electronic device according to claim 16, wherein the rack portion is integrally formed with the second portion.

18. The electronic device according to claim 16, wherein the driving mechanism comprises a second transmission structure connected to the reel and the first transmission gear; and the motor is configured to drive the reel to rotate through the second transmission structure to release the flexible display screen assembly while driving the second portion to move away from the first portion.

19. The electronic device according to claim 18, wherein the second transmission structure comprises a second transmission gear, and a third transmission gear; and
wherein the second transmission gear is fixed on the reel, the third transmission gear is rotatably arranged on the first portion and meshed with the first transmission gear and the second transmission gear individually, and the first transmission gear and the second transmission gear are located on opposite sides of the third transmission gear.

20. An electronic device, comprising:
a housing, comprising a first portion and a second portion movable with respect to each other; and
a flexible display screen assembly;
wherein an end of the flexible display screen assembly connected to the second portion, and another end of the flexible display screen assembly is arranged in the housing;
wherein the flexible display screen assembly comprises a flexible display screen, and a support assembly stacked with the flexible display screen; the support assembly comprises a plurality of support members, and a first flexible member; the plurality of support members are arranged in parallel, and every adjacent two of the plurality of support members have a gap formed therebetween; and the first flexible member passes through the gaps sequentially and winds the plurality of support members; and
wherein a part of the flexible display screen assembly located in the housing at least partially extends out of the housing when the first portion and the second portion move away from each other, to expand a display portion of the flexible display screen.
